Europäisches Patentamt

**European Patent Office**

Office européen des brevets

(11) Publication number: **0 317 517 A2**

## (12) EUROPEAN PATENT APPLICATION

(21) Application number: **88830380.7**

(22) Date of filing: **20.09.88**

(51) Int. Cl.⁴: **H 02 B 1/04**

(30) Priority: **22.09.87 IT 2198787**

(43) Date of publication of application:
**24.05.89 Bulletin 89/21**

(84) Designated Contracting States:
**BE CH DE ES FR GB LI NL SE**

(71) Applicant: **Apostolo, Carlo**
**Via San Marcellino, 25**
**I-22050 Merate (Como) (IT)**

(72) Inventor: **Apostolo, Carlo**
**Via San Marcellino, 25**
**I-22050 Merate (Como) (IT)**

(74) Representative: **Cicogna, Franco**
**Ufficio Internazionale Brevetti Dott.Prof. Franco Cicogna**
**Via Visconti di Modrone, 14/A**
**I-20122 Milano (IT)**

The title of the invention has been amended (Guidelines for Examination in the EPO, A-III, 7.3).

(54) Composable low-voltage electrical panel for a modular apparatus in an insulating housing.

(57) There is disclosed a system of modular elements, for making electrical panels, in particular low-voltage electrical panels, which comprises at least a module including a simple-column with top and bottom output terminal blocks, at least a module with a simple upright column and side terminal blocks, for modular electrical apparatus, with a direct coupling to the boxed-in switches, and at least a module including a double upright column, for boxed-in switches on a double row.

Fig.1

Bundesdruckerei Berlin

**Description**

## COMPOSABLE LOW-VOLTAGE ELECTRICAL PANEL, OF THE SEGREGATED BUS-BAR TYPE, IN PARTICULAR FOR MODULAR APPARATUS AND AUTOMATIC SWITCHES AND CURRENT-LIMITING SWITCHES IN INSULATING HOUSINGS OF HIGH RATED CURRENT"

### BACKGROUND OF THE INVENTION

The present invention relates to a composable low-voltage electrical panel structure, of the segregated bus-bar type, in particular for modular electrical apparatus and automatic switches and current-limit switches, arranged in insulating housings or boxes and of high rated current.

As is known, very felt is nowadays the problem of making, in a functional and quick way, low voltage electrical panels, specifically provided for controlling and protecting several types of electrical appliances or apparatus, including operating and/or supplying elements, such as electrical motors, servocontrols, controlled power supplies and the like.

Presently this electrical panels are made by substantially low-production methods, which use scarcely flexible base components, that is components which can not be easily adapted to a broad range of requirements and which, moreover, are to be assembled by highly skilled operators with long times for the installation and calibration steps, which negatively affects the operating and cost characteristics of the finished electrical panel.

### SUMMARY OF THE INVENTION

Accordingly, the task of the present in vention is to provide a system of base electrical modules which can be obtained starting from metal sheet elements, insulating material and copper elements, which affords the possibility of easily assembling a broad range of electrical panels, in particular of the low-voltage type, by using conventional tools, such as screw-drivers, cutting and/or the like devices, and, in particular, with a very reduced number of component codes, and without the need of carrying out adjusting and/or calibrating operations during the assembling steps.

Within the scope of the above mentioned task, a main object of the present invention is to provide a range of modular elements, for making low voltage electrical panels, which afford the possibility of constructing electrical panels meeting a broad range of protection requirements, from usual protection requirements to tight protection requirements.

Another object of the present invention is to provide modular elements for making electrical panels which may be easily and quickly assembled and which have standardized size so as to afford the possibility of making at least three types of columns.

Yet another object of the present inven tion is to provide a range of modular elements, for making electrical panels, which afford the possibility of pre-assembling modular switches by using conductor wires of standardized lengths,which are precut and electrically terminated by means of automatic machines, with the possibility of adopting wire lengths within a very broad range.

Yet another object of the present invention is to provide an electrical component system for making electrical panels in which the bus-bars, the connecting bars and the branching bars are all of standardized type and related to the specific type of switch to be used jointly with the related supporting base.

Yet another object of the present invention is to provide a modular element system, for making electrical panels, which afford the possibility of displacing the bus-bar system from a column to another column, with a minimum number of product code types (in particular only three types), with a segregated bus-bar systems and with standardized sleeves and bus-bar supporting assemblies.

Yet another object of the present invention is to provide a modular elements system for making electrical panels the single elements of which can be easily associated, by means of fixed mounting members, so as to completely eliminate any needs of carrying out complex adjusting operation, during the assembling steps of said electrical panel.

According to ne aspect of the present invention, the above mentioned task and objects, as well as yet other objects, which will become more apparent hereinafter, are achieved by a modular element system for making electrical panels, in particular low-voltage electrical panels, characterized in that it comprises a simple-column module, with top and bottom output terminal blocks, a module including a simple upright column and side terminal blocks, for modular electrical appliances, with a direct coupling to the boxed-in switches, and a module having a double-upright column for boxed-switches on a double row.

### BRIEF DESCRIPTION OF THE DRAWINGS

Further characteristics and advantages of the modular element system for making electrical panels, in particular low-voltage electrical panels, according to the present invention, will become more apparent thereinafter, from the following detailed description of several presently preferred embodiment of the subject system which are illustrated, by way of an indicative but not limitative example, in the accompanying drawings, in which:

Figure 1 is a perspective view illustrating a column module of the modular element system according to the invention, devoid of its base supporting plate and coupling termical blocks;

Figure 2 is another perspective view which represents the module of Figure 1, provided with bottom coupling terminal blocks and supported on a base plate;

Figure 3 is another perspective view illustrating the column module of the preceding Figures, provided with side coupling terminal blocks;

Figure 4 is a further perspective view illustrating a column module, of the double upright or riser type, in a partially disassembled condition in order to clearly show the bus-bar system thereof;

Figure 5 is yet another perspective view illustrating a column, mounted in a box-like body, forming the holding body of a possible electrical panel which can be made by using the modular element system according to the invention; and

Figure 6 A illustrates yet another perspective view showing possible combinations which can be made by the bus-bar system according to the invention;

Figures 6 B to 6 F illustrate other modular components for the conducting bus-bars; and

Figures 7 A to 7 C illustrate yet other possible embodiments of electrical panels which can be assembled by using the modular element system according to the invention.

## DESCRIPTION OF THE PREFERRED EMBODIMENTS

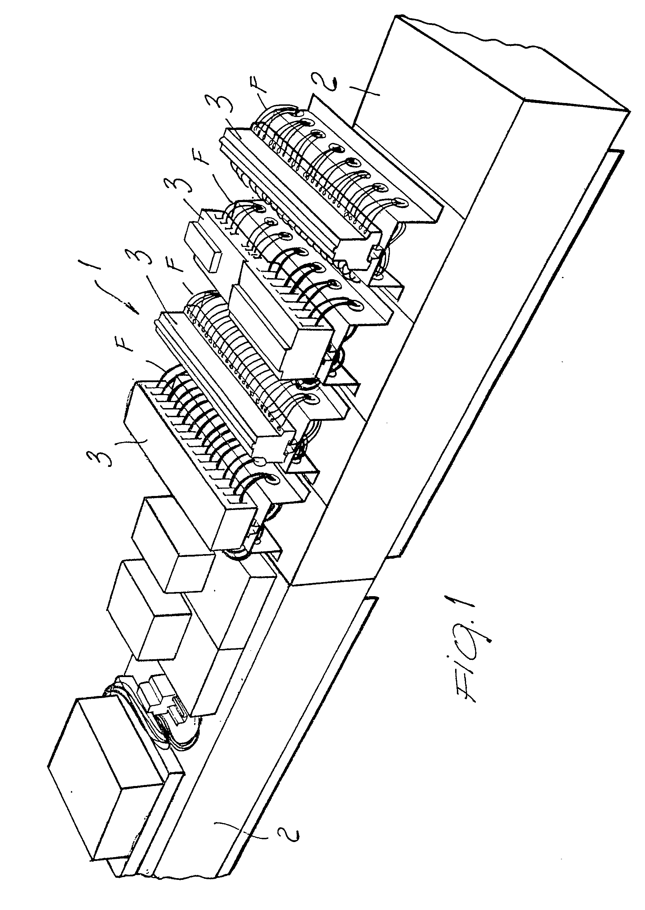

With reference to the Figures of the above mentioned drawings, Figure 1 illustrates a perspective view of a column module which forms one of the main modules of the modular system for making electrical panels according to the invention.

More specifically, this module, which has been overally indicated at the reference number 1 and which, in Figure 1, is shown by a broken-away view, comprises a plurality of supporting box-like elements 2.

Each box-like element 2, having a substantially parallelepipedal configuration, is made starting from a metal sheet, and supports electrical appliances, indicated generally at the reference number 3, which, in particular can consist of boxed- in electrical switches or breakers.

More specifically, said electrical switches or breakers 3 can be prewired by using conductor wires F of standardized length, which have been precut and electrically terminated by means of automatic machines of conventional types (and not shown).

In this connection it should be apparent that the system can provide a space for greater lenghts.

Thus, the invention firstly provides the possibility of automatizing the wiring and assembling operations of the electrical appliances mounted on the supporting column 1.

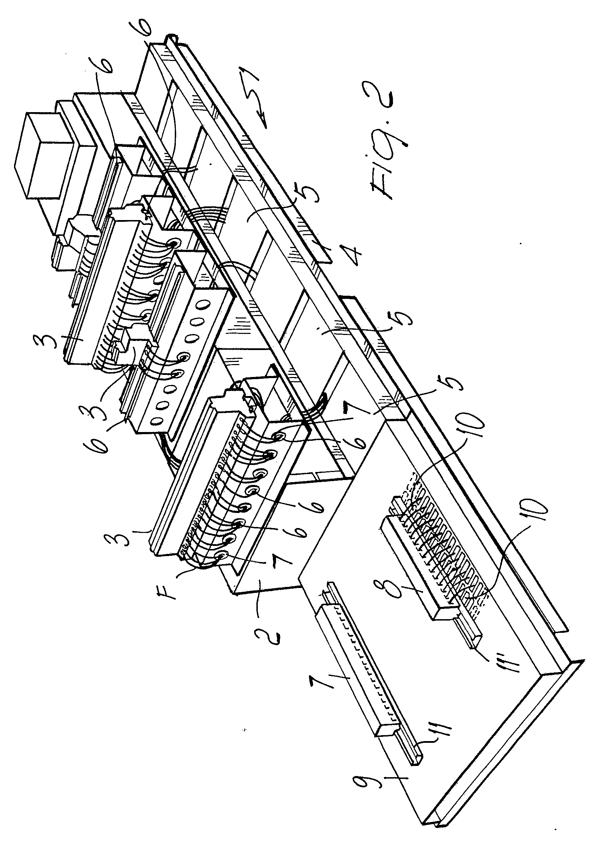

In Figure 2, the column module 1 is shown mounted on a base supporting plate 4, also made of a sheet metal.

The conductor wires F are protected by cover modules, for example made of PVC, and which have been indicated overally at the reference numbers 5 and 5'.

The mentioned cover modules 5 and 5' can be affixed by means of any known systems, for example by using screws and the like, in a removable way, to the base supporting plate 4 and box-like element 2.

As specifically shown in Figure 2, each supporting box-like body 2 is provided with a sup porting element 6 including a standardized guide and rail 6' and an edge 6" of sheet metal for affixing the wire covering module 5'; the supporting element 6 is provided with a plurality of throughgoing holes therein annular elements are engaged, for example made of a resilient material such as rubber and the like, for protecting the conductor wires F.

According to the invention, the electrical appliances 3 are supported on the supporting box-like elements or bodies 2 by means of standardized rail guides 6' which are removably affixed to the support member 6, in turn coupled removably to the top face of each supporting box-like body 2, for example by means of screws, so as to afford the possibility of removably affixing the individual electrical appliances and/or breakers 3.

According to another aspect of the invention, the conductor wires F, coming from the mentioned appliances 3, and protected by the plastics material box-like bodies 5 and 5' arrive at the bottom terminal blocks 7 and 8.

These terminal blocks 7 and 8, in particular, are supported by a metal base plate 9, of box-like shape, the top face of which is provided with a plurality of throughgoing slots 10 for affixing in an adjustable way thereon rail elements 11 and 11' for adjustably supporting the terminal blocks 8.

In Figure 2, the column 1 is provided with a single bottom terminal block; however, it should be apparent that, if required, said column 1 may also be provided with a top terminal block or with both a bottom and a top terminal block.

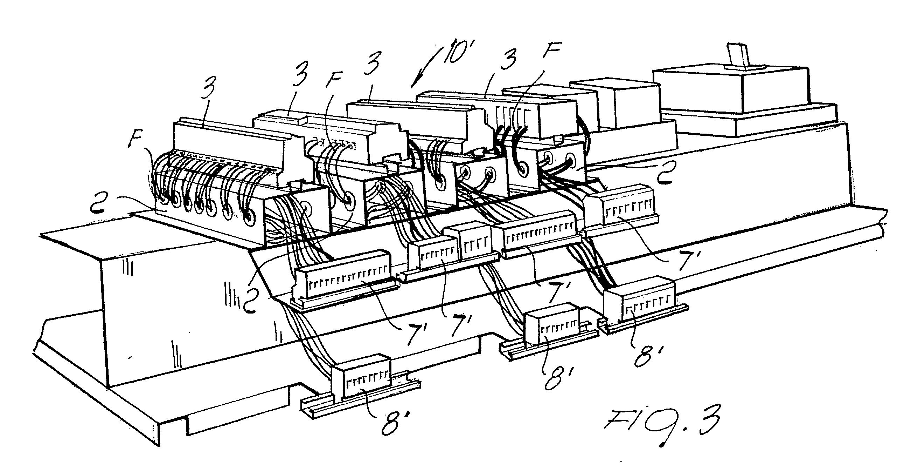

Figure 3 shows a further column module, indicated generally at the reference number 10', which is substantially similar to the column module 1.

A main difference of the above column modules consists of the fact that the terminal blocks 7' and 8' are mounted laterally at two different levels.

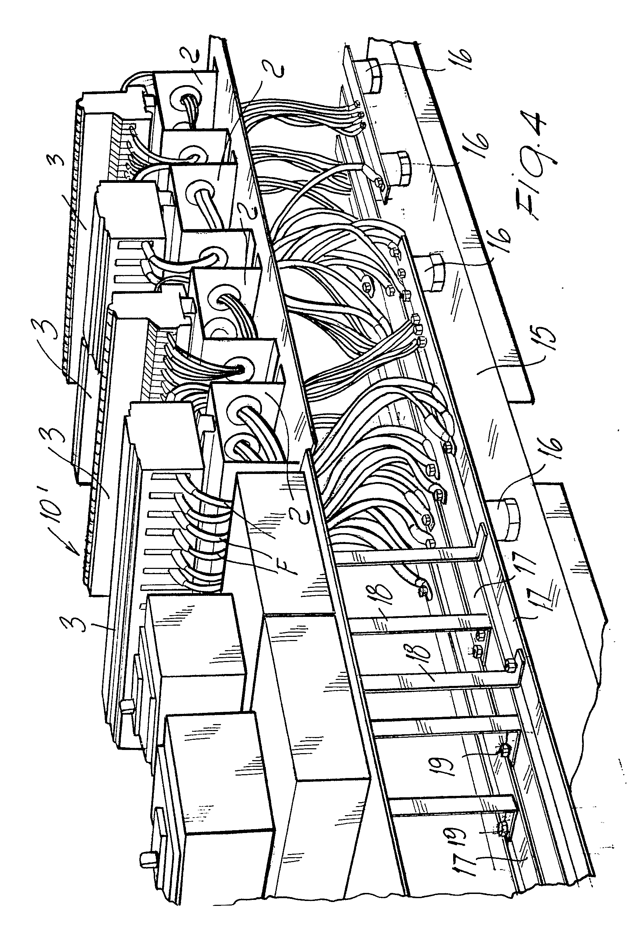

With reference to Figure 4, this is a perspective view illustrating a further column module 10", in a partially disassembled condition, in order to clearly illustrate the conductor bus-bar system.

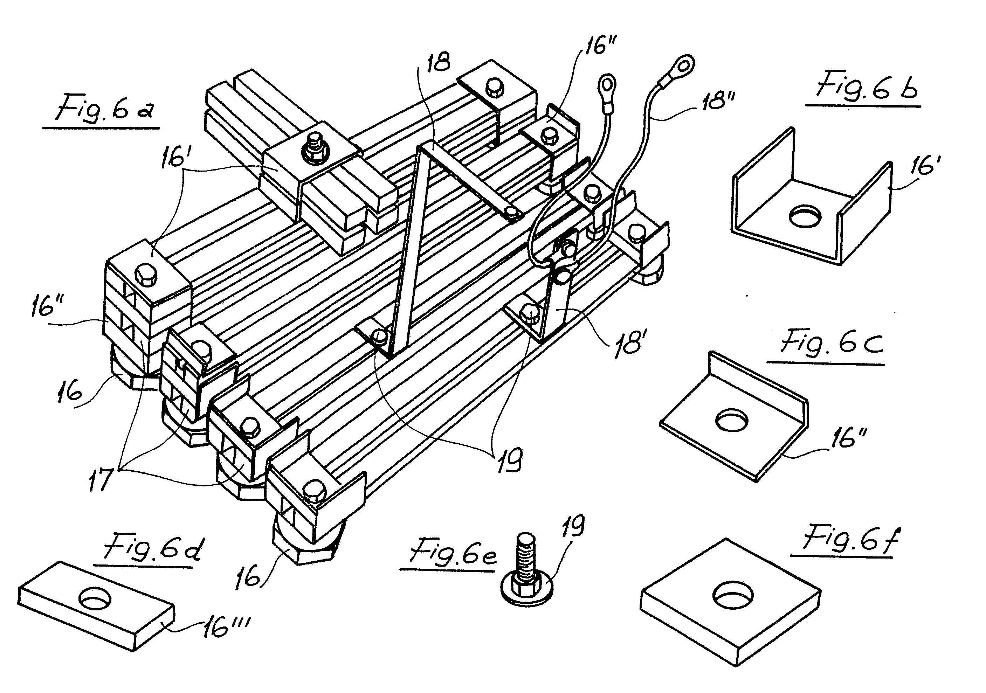

More specifically, this conductor bus-bar system which, as particularly shown in Figures 6 A, is insulated from the base supporting plate 15 by means of insulating members 16, and is affixed to the insulating members by means of modular metal elements 16' (Fig. 6B) 16" (Fig. 6C) 16'" (Fig. 6D) comprises conductor bus-bar elements 18, of substantially L or C shape, for coupling the boxed-in appliances, and conductor bus-bar elements 18' for coupling with insulated conductor wires 18".

The bus-bars, in particular, are mutually coupled, by means of suitable coupling elements, such as the bolt and nut assemblies 19 (Fig. 6E).

Thus, according to the invention, it will be possible to assemble any types of electrical panels, in particular low-voltage electrical panels, by substantially using only two types of rectilinear bus-bars (omnibus bars).

The coupling and branching bus-bars,for several types and rated values of boxed-in breakers will be in this way standardized,and will constitute a part of the code or product type related to the type of the breaker or switch,jointly with the related supporting element and branching system included.

More specifically,by the use of the disclosed bus-bar system it will be possible to displace or transfer the bus bar system from a column to another column,by means of only three product types,the bus bars having a segregated arrangement,and by means of three different length sleeves which will use standardized bus bars and bar holders as well as the conductor element of fig.6F.

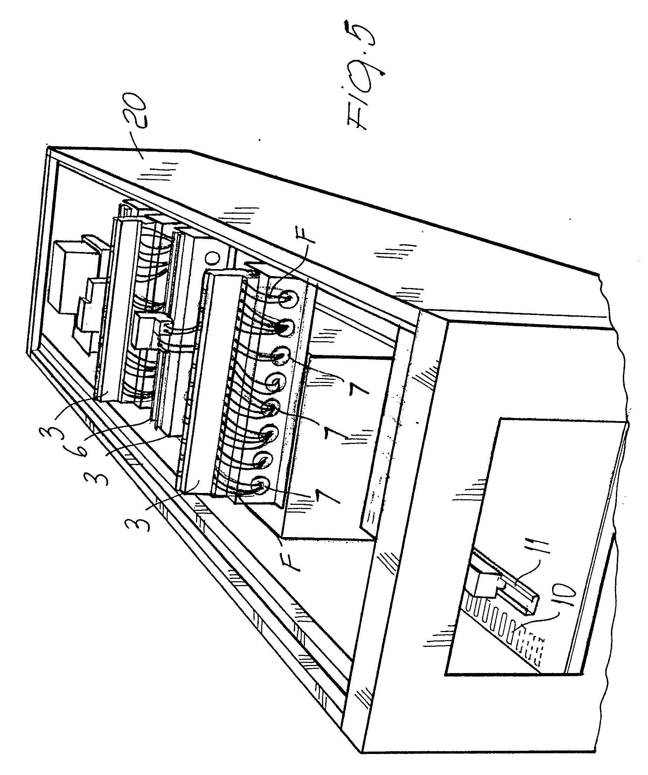

Figure 5 illustrates,by a perspective view, and in a partially broken away manner,a column module according to the present invention which is housed in a box-like body 20 provided for forming the holding body of the electrical panel which,in figure 5,has been shown devoid of the closure doors.

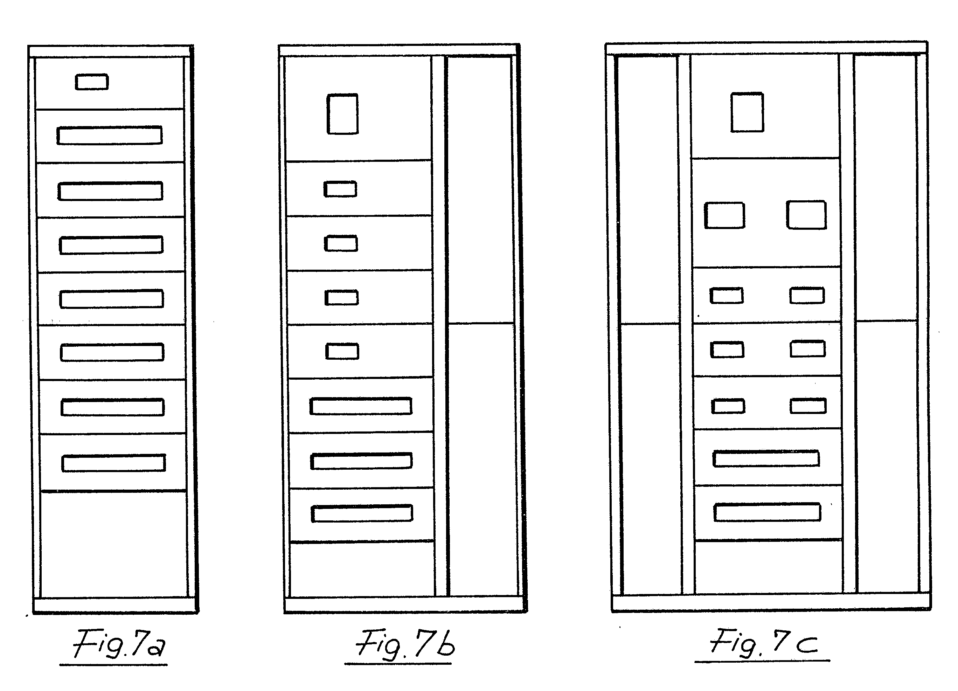

Finally,with reference to figures 7A-7C, there are shown herein possible embodiments of electrical panels which can be easily and quickly assembled starting from the modular system elements according to the present invention.

These electrical panels,in particular,have been shown as closed by the related closing doors.

The invention,as it should be apparent from the preceding disclosure,affords the possibility of rationally automatizing the construction of a very large number of electrical panels.

From the above disclosure it should be apparent that the invention fully achieves the intended task and objects.

In particular,the modular system according to the invention affords the possibility of making electrical panels having the following main features:

a) a protection rate of three types;

1- conventional electrical panels with a protection grade corresponding to IP 30-powder tight electrical panels with protection degree corresponding to IP 41; and sealed electric panels with a protection degree or rate corresponding to IP 54.

b) a size standardization providing for the use of only three types of columns,that is:

1- a simple column with top and bottom output terminal blocks;

2- a simple upright column with side terminal blocks for modular appliances and direct coupling to the boxed-in breakers having ratings greater than 100 A;

3- a column with double upright for boxed-in breakers arranged in a double row,for example with a back to back coupling system;

c) an inner protection minimum degree corresponding to IP 20 towards the live parts,with open doors and removed covers;

d) a segregated bus bar system made starting from only two types of elements;

e) the possibility for all of the three types of columns of completing the wiring operations by using only the bottom plate,included the bus bar system and related connexions and the application of the supporting elements for the terminal block prewired modular electrical appliances

In particular,upon having completed the bottom plate,in the premounted column will be inserted the end electrical terminations and sides and the electrical panel will be fitted with the covering plates and doors.

f) pre-assembling of the supporting elements with modular breakers,by using standardized length precut wires,which can be electrically terminated by automatic machines,

g) elimination of the conventional channels with PVC covers as presently used for holding the wires and which are rather expensive

h) for the application of modular appliances there is provided only a type of code,which comprises two normalized shoulders,a bottom supporting member,an appliance supporting member with its DIN guide and wire covering PVC cover member,copper element to be applied to the omnibus bars for coupling the power supply wires of fixed type or of withdrawable type,and the application by means of two suitable heigth shoulders and box-like supporting element suitable to assure a protection degree corresponding to IP 20.

In this connection it should be pointed out that the code,related to the appliance type,is completed with supporting plate,relating shoulders and branching copper bus bars with the related fixtures.

l) the coupling and branching bus bars of several types and ratings are standardized and will constitute a part of a product code,related to the breaker type,jointly with the respective supporting member.

m) the translation of the bus bar system from a column to another column (omnibus bus bars) is obtained with only thre types of product codes,with the bus bars always having a segregated arrangement and by using sleeves having three different lengths,which will use standardized bars and bar holders.

n) all the modular system is so designed that the arrangement of the elements is of the fixed abutment type,without any adjusting members

o) it is possible to provide for a constructional variation for the boxed in breakers with metal segregation both toward the bus bar system and for each breaker. It is also possible to obtain a metal segregation of the modular appliance for each row of 24 modules.

In this case all of the component elements of the electric panels will be the same.

The variation is obtained by only changing the type of support.This variation may be completed by a single fixed drawer,for a motor starting of the M.C.C. type,with removable appliance bearing plate with the panel under voltage,by preliminary detaching the wires from the terminal block and at the output of the line protecting fuses.

While the invention has been disclosed and illustrated with reference to some embodiments thereof, it should be apparent that the disclosed embodiments are susceptible to several modifications and variations, all of which will come within the spirit and scope of the invention itself,as defined in the accompanying claims.

## Claims

1- A modular element system for making electrical panels,in particular low voltage electrical panels, characterized in that said system comprises a simple column module,with top and bottom output terminal blocks, a simple upright column module with side terminal blocks for modular electrical appliances,with direct coupling to the boxed-in breakers and a double upright column module for boxed in breakers.

2- A modular element system for making electrical panels according to the preceding claim,characterized in that each column module comprises a supporting base plate, adapted to removably support a plurality of box-like bodies for bearing prewired electrical appliances,with at least of said box-like body there being removably associated at least a rail guide member for the adjustable coupling of an electrical appliance and/or breaker.

3- A modular element system for making electrical panels,in particular low voltage electrical panels,according to the preceding claims,characterized in that each said supporting box-like body is provided,through a side face thereof,with a plurality of throughgoing holes adapted for receiving a corresponding plurality of power supply wires having a standardized length,as preliminary cut and electrically terminated by means of automatic machines,an insulating cover member being provided for protecting said wires at least at the side of the output of modular breakers.

4- A modular system according to claim4,characterized in that with said throughgoing holes there are associated ring members for protecting said wires.

5- A modular system according to one or more of the preceding claims,characterized in that with said base plate of said column modules and said supporting box-like bodies there are removably associated a plurality of box-like cover members for covering and/or protecting said wires.

6- A modular system according to one or more of the preceding claims,characterized in that said output top and bottom terminal blocks of said simple column module are removable supported,in an adjustable way,on rail guide members,in turn removably supported,in an adjustable way,on a box-like member supported on said base plate and having its top face formed with a plurality of affixing slots.

7- A modular system according to one or more of the preceding claims,characterized in that said side terminal blocks are removably associated with said column module at a same level and/or at different levels.

8- A modular system,according to one or more of the preceding claims,characterized in that it comprises a segregated bus bar system including a plurality of standardized bars and related connexion modular elements.

9- A modular system according to claim 8,characterized in that said bus bar system comprises a substantially rectilinear bus bar module and a substantially L or C shaped bus bar module.

Fig.1

EP 0 317 517 A2

Fig. 2

FIG.3

EP 0 317 517 A2

FIG.4

Fig.5

Fig.6b

Fig.6c

Fig.6f

Fig.6a

Fig.6e

Fig.6d

Fig.7c

Fig.7b

Fig.7a